Europäisches Patentamt

European Patent Office

Office européen des brevets

(11) Veröffentlichungsnummer: **0 058 758**
B1

# EUROPÄISCHE PATENTSCHRIFT

(45) Veröffentlichungstag der Patentschrift:
12.09.84

(51) Int. Cl.³: **H 04 L 11/00, H 04 Q 11/04**

(21) Anmeldenummer: 81109150.3

(22) Anmeldetag: 28.10.81

(54) Schaltungsanordnung zur Aufnahme und Weiterleitung von mit relativ hoher Geschwindigkeit auftretenden Datensignalen in einem Datenvermittlungsnetz.

(30) Priorität: 25.02.81 DE 3107089

(43) Veröffentlichungstag der Anmeldung:
01.09.82 Patentblatt 82/35

(45) Bekanntmachung des Hinweises auf die Patenterteilung:
12.09.84 Patentblatt 84/37

(84) Benannte Vertragsstaaten:
AT CH IT LI SE

(56) Entgegenhaltungen:
DE - B - 2 813 961

TELCOM REPORT, Band 3, Nr. 6, 1980, Seiten 439,440,
Passau, DE. K. GOSSLAU et al.: "Siemens system
EDS-jetzt auch fur 64kbit/s"
REVIEW OF ELECTRICAL COMMUNICATION
LABORATORIES, Band 28, Nr. 5,6, Mai-Juni 1980, Seiten
328-337, Tokyo, JP. T. ARITA et al.: "Digital data
switching network"
INTERNATIONAL SWITCHING SYMPOSIUM, 7.-11. Mai
1979, Seiten 962-969, Paris, FR.
NATIONAL TELECOMMUNICATIONS CONFERENCE,
Band 3,4, 30. November - 4. Dezember 1980, Seiten
47.2.1 bis 47.2.4, New York, USA

(73) Patentinhaber: SIEMENS AKTIENGESELLSCHAFT,
Berlin und München Wittelsbacherplatz 2,
D-8000 München 2 (DE)

(72) Erfinder: Naessl, Robert, Dipl.-Ing., Am Hohen Weg 29,
D-8081 Kottgeisering (DE)

## Beschreibung

Die Erfindung bezieht sich auf eine Schaltungsanordnung zur Aufnahme von mit relativ hoher Geschwindigkeit auf Hochgeschwindigkeits-Zubringerleitungen auftretenden Datensignalen und Weiterleitung dieser Datensignale über Hochgeschwindigkeits-Abnehmerleitungen in einem wenigstens eine Zeitvielfach-Datenvermittlungsanlage umfassenden Datenvermittlungsnetz, in welchem jeder Zeitvielfach-Datenvermittlungsanlage eine gesonderte Koppeleinrichtung zugeordnet ist, über die die genannten Datensignale vermittelt werden und die dazu von einer Steuereinrichtung der Zeitvielfach-Datenvermittlungsanlage steuerbar ist, über welche im Zuge der jeweiligen Datensignalverbindung mit relativ niedriger Geschwindigkeit auftretende Signalisierungsinformationen vermittelt werden.

Im Zusammenhang mit dem Vermitteln von mit relativ hoher Geschwindigkeit (64 kbit/s) auftretenden digitalen Datensignalen ist es bereits bekannt [telcom report 3 (1980), Heft 6, Seiten 439, 440], eine bereits vorhandene Zeitvielfach-Datenvermittlungsanlage hinsichtlich ihrer Koppeleinrichtungen und ihrer Software so auszugestalten, dass Informationskanäle mit bitfolgenunabhängiger 64-kbit/s-Durchschaltung im Duplexverfahren und zusätzliche sogenannte mittelschnelle Kanäle für die Übertragung von Signalisierungsinformationen bereitstehen. Die zuletzt erwähnten Kanäle dienen dabei der sogenannten out-slot-Signalisierung und der end-to-end-Übertragung von Steuersignalen, die zwischen einzelnen miteinander zu verbindenden bzw. verbundenen Teilnehmerstellen auszutauschen sind. Wie die erwähnte Datenvermittlungsanlage auszubilden ist, damit sie die mit hoher Geschwindigkeit auftretenden digitalen Datensignale und zugehörige Signalisierungsinformationen zu vermitteln vermag, ist in dem betreffenden Zusammenhang jedoch nicht bekannt.

Der Erfindung liegt nun die Aufgabe zugrunde, einen Weg zu zeigen, wie eine Schaltungsanordnung der eingangs genannten Art auszubilden ist, um auf relativ einfache Weise die mit hoher Geschwindigkeit auftretenden Datensignale und die Signalisierungsinformationen vermitteln zu können.

Gelöst wird die vorstehend aufgezeigte Aufgabe bei einer Schaltungsanordnung der eingangs genannten Art erfindungsgemäss dadurch, dass die Koppeleinrichtung einen Durchschaltespeicher mit den Hochgeschwindigkeits-Zubringerleitungen individuell zugeordneten Zubringerzellen aufweist, in die von der Steuereinrichtung der zugehörigen Zeitvielfach-Datenvermittlungsanlage jeweils eine Adresse einer für eine Datensignalaufnahme in Frage kommenden Hochgeschwindigkeits-Abnehmerleitung einschreibbar ist, und dass im Zuge der Vermittlung von mit der hohen Geschwindigkeit auftretenden Datensignalen lediglich der der jeweiligen Hochgeschwindigkeits-Zubringerleitung zugeordneten Zubringerzelle des Durchschaltespeichers angesteuert und durch Bereitstellung der in der betreffenden Zubringerzelle enthaltenen Adresse die für eine Datensignalaufnahme in Frage kommende Hochgeschwindigkeits-Abnehmerleitung wirksam geschaltet werden.

Die Erfindung bringt den Vorteil eines relativ geringen schaltungstechnischen Aufwands mit sich, um sowohl mit relativ hoher Geschwindigkeit auftretende Datensignale als auch Signalisierungsinformationen zu vermitteln. Die Vermittlung der mit relativ hoher Geschwindigkeit auftretenden Datensignale erfolgt praktisch ohne eine Belastung der Zeitvielfach-Datenvermittlungsanlge bzw. der dieser zugehörigen Steuereinrichtung, nachdem von dieser Steuereinrichtung in den erwähnten Durchschaltespeicher die für herzustellende Verbindungen erforderlichen Adressen eingeschrieben worden sind.

Vorzugsweise ist der Durchschaltespeicher zur Adressierung seiner Zubringerzellen am Ausgang eines Eingabecodierers angeschlossen, der ausgangsseitig den mit ihm verbundenen Hochgeschwindigkeits-Zubringerleitungen entsprechende Adressensignale abzugeben vermag. Der Durchschaltespeicher ist ausgangsseitig dabei mit dem Eingang eines Ausgabecodierers verbunden, der auf eine Adressierung durch die von dem Durchschaltespeicher abgegebenen Adressen hin die für die Weiterleitung von Datensignalen zu benutzenden Hochgeschwindigkeits-Abnehmerleitungen wirksam zu schalten gestattet. Hierdurch ergibt sich der Vorteil eines besonders geringen schaltungstechnischen Aufwands für die Vermittlung der mit relativ hoher Geschwindigkeit auftretenden Datensignale. Dabei können in vorteilhafter Weise für den Eingabecodierer und den Ausgabecodierer Schaltungsanordnungen von der Art verwendet werden, wie sie als Codewandler in Zeitvielfach-Datenvermittlungsanlagen üblicherweise verwendet werden.

Zweckmässigerweise enthält der Eingabecodierer einen Datensignal-Puffer, der ausgangsseitig direkt mit einem Durchschalteeingang des Ausgabecodierers verbunden ist. Hierdurch ergibt sich der Vorteil einer besonders einfachen Weiterleitung bzw. Vermittlung der mit relativ hoher Geschwindigkeit auftretenden Datensignale.

Vorzugsweise ist der Eingabecodierer eingangsseitig über eine Verknüpfungsanordnung nur mit denjenigen Hochgeschwindigkeits-Zubringerleitungen wirksam verbunden, die in Datensignalverbindungen einbezogen sind. Dies bringt den Vorteil mit sich, dass jeweils nur diejenigen Hochgeschwindigkeits-Zubringerleitungen durch entsprechende Ansteuerung zu berücksichtigen sind, die tatsächlich in Datensignalverbindungen einbezogen sind, wodurch also unnötige Steuerungsvorgänge auf einfache Weise vermieden werden können.

Die zuvor erwähnte Verknüpfungsanordnung wird vorzugsweise von einem Steuerspeicher gesteuert, in welchem für jede Hochgeschwindigkeits-Zubringerleitung ein gesonderter Speicherplatz vorgesehen ist, in den lediglich dann ein bestimmtes Markierungssignal (1-Bit) eingetragen ist, wenn die zugehörige Hochgeschwindigkeits-Zubringerleitung in eine Datensignalverbindung einbezogen ist. Hierdurch ergibt sich der Vorteil eines besonders geringen schaltungstechnischen Aufwands für die Steuerung der Verknüpfungsanordnung.

Die zuvor erwähnten Markierungssignale werden zweckmässigerweise in den Steuerspeicher zugleich mit dem Eintragen der Adressen in den Durchschaltespeicher eingetragen. Dies bringt den Vorteil eines ganz besonders geringen schaltungstechnischen Steuerungsaufwands mit sich.

Zweckmässigerweise ist am Ausgang des Ausgabecodierers ein gesonderter Pufferspeicher vorgesehen. Diese Massnahme bringt den Vorteil mit sich, dass auf der Ausgangsseite der betrachteten Schaltungsanordnung noch eine Zeitkanalumsetzung vorgenommen werden kann bzw. dass die dort jeweils bereitgestellten Datensignale so lange festgehalten werden können, bis sie aus verarbeitungstechnischen Gründen weitergeleitet werden können.

Zweckmässigerweise sind bei seriell auftretenden Datensignalbits der Eingabecodierer eingangsseitig mit einem Serien-Parallel-Umsetzer und der Ausgabecodierer ausgangsseitig mit einem Parallel-Serien-Umsetzer verbunden. Dies bringt den Vorteil mit sich, dass die beiden Codierer relativ einfach aufgebaut werden können.

Anhand von Zeichnungen wird die Erfindung nachstehend an einem Ausführungsbeispiel näher erläutert.

Fig. 1 zeigt in einem Blockdiagramm eine Zeitvielfach-Datenvermittlungsanlage in Verbindung mit einer gesonderten Koppeleinrichtung gemäss der Erfindung.

Fig. 2 zeigt eine mögliche Ausführungsform der Koppeleinrichtung gemäss Fig. 1.

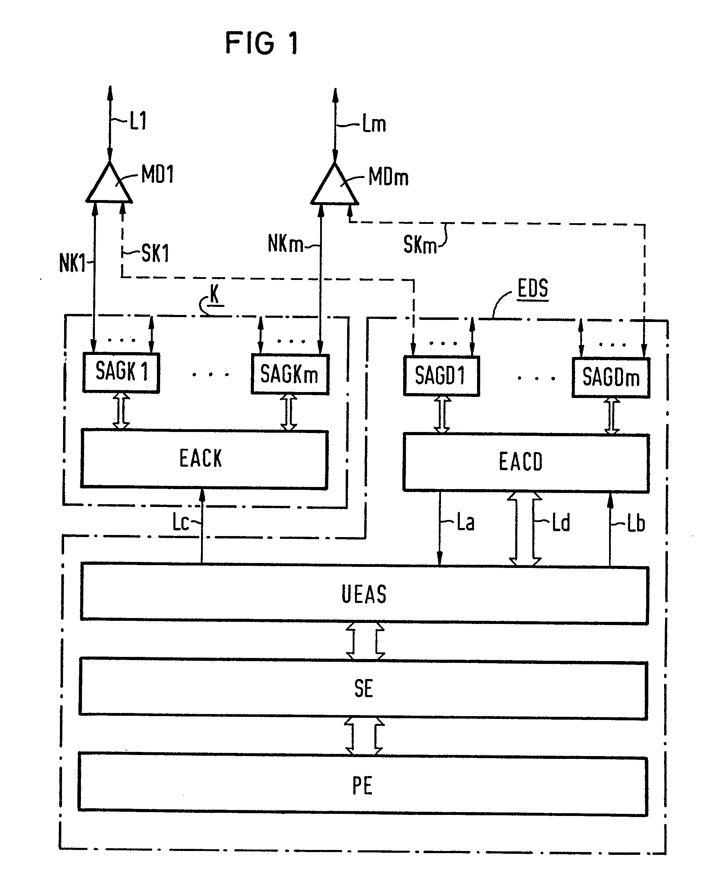

Die in Fig. 1 schematisch dargestellte Zeitvielfach-Datenvermittlungsanlage EDS ist lediglich mit zu einer einzigen Gruppe von Anschlussschaltungen gehörenden Anschlussschaltungen SAGD1 bis SAGDm dargestellt. Diese Anschlussschaltungen SAGD1 bis SAGDm dienen zur Aufnahme und Abgabe von auch als Envelopes bezeichneten Signalgruppen, die jeweils beispielsweise 6+2 oder 8+2 Bits aufweisen. Von diesen Bits bilden 6 bzw. 8 Bits die eigentlichen Datensignalbits, während die übrigen beiden Bits ein Statusbit bzw. ein Synchronisierbit darstellen.

Die Anschlussschaltungen SAGD1 bis SAGDm sind eingangs- und ausgangsseitig mit einem Eingabe-/Ausgabe-Codewandler EACD verbunden, dessen Aufgabe unter anderem darin besteht, über die einzelnen Anschlussschaltungen zugeführte Signale zu dem eigentlichen Verarbeitungsteil der Datenvermittlungsanlage EDS weiterzuleiten bzw. von diesem Verarbeitungsteil her über die Anschlussschaltungen abzugebende Signale weiterzuleiten. Der Eingabe-/Ausgabe-Codewandler EACD ist dazu mit zwei Steuerleitungen La, Lb und einer Signalübertragungsleitung Ld mit einer Übertragungsablaufsteuerung UEAS der Datenvermittlungsanlage EDS verbunden. Diese Übertragungsablaufsteuerung UEAS ist ihrerseits mit einer Speichereinheit SE verbunden, die wiederum mit einer Programmsteuereinheit PE verbunden ist.

Im Zusammenhang mit der zuvor kurz erläuterten Datenvermittlungsanlage EDS sei noch angemerkt, dass in der Speichereinheit SE dieser Datenvermittlungsanlage jeder der mit den Anschlussschaltungen SAGD1 bis SAGDm verbundenen Zubringerleitungen — das sind Übertragungsleitungen, auf denen Signale zugeführt werden können, die zu vermitteln sind — eine sogenannte Zubringerzelle individuell zugehörig ist. In die einer Zubringerleitung zugehörige Zubringerzelle der Speichereinheit SE wird im Zuge des Aufbaus einer Verbindung zu einer als Abnehmerleitung zu bezeichnenden Leitung — über die von der betreffenden Zubringerleitung zugeführte Signale weiterzuleiten sind — eine die betreffende Abnehmerleitung bezeichnende Abnehmeradresse eingetragen. Sind dann im Zuge der bestehenden Verbindung Signale von der betreffenden Zubringerleitung an die gewünschte Abnehmerleitung weiterzuleiten, so wird über den Eingabe-/Ausgabe-Codewandler EACD eine den jeweiligen Signalübertragungswunsch angebende Meldung über die Steuerleitung La an die Übertragungsablaufsteuerung UEAS abgegeben, die unter Heranziehung der die betreffende Zubringerleitung bezeichnenden Adresse sodann aus der zugehörigen Zubringerzelle der Speichereinheit SE die Adresse der in Frage kommenden Abnehmerleitung abholt. Diese Adresse gelangt dann über die Signalleitung Ld zusammen mit einem auf der Steuerleitung Lb auftretenden Steuersignal zu dem Eingabe-/Ausgabe-Codewandler EACD hin, der dann die Verbindung der erwähnten Zubringerleitung mit der in Frage kommenden Abnehmerleitung wirksam schaltet. Dabei können die von der jeweiligen Zubringerleitung zu der jeweils in Frage kommenden Abnehmerleitung zu übertragenden Signale entweder gewissermassen direkt weitergeleitet werden, also ohne vorherige Einspeicherung in die Speichereinheit SE — oder aber die betreffenden Signale können in der Speichereinheit SE vor ihrer Weiterleitung zwischengespeichert werden. Auf diese Vorgänge wird jedoch hier nicht weiter eingegangen, da sie bereits an anderer Stelle näher beschrieben worden sind (siehe «Siemens-Zeitschrift», Heft 2, 1977, Seiten 82 bis 87).

In Fig. 1 ist zusätzlich zu den zuvor erläuterten, zu der Datenvermittlungsanlage EDS gehörenden Einrichtungen noch eine gesonderte Koppeleinrichtung K vorgesehen, die lediglich über eine Steuerleitung Lc mit der Datenvermittlungsanlage EDS verbunden ist. Die Koppeleinrichtung K umfasst Anschlussschaltungen SAGK1 bis SAGKm, die eingangs- und ausgangsseitig mit einer Verbindungssteuerschaltung EACK verbunden sind, die ihrerseits über die erwähnte Steuerleitung Lc mit der Übertragungsablaufsteuerung UEAS der Datenvermittlungsanlage EDS verbunden ist.

Die Anschlussschaltungen SAGK1 bis SAGKm sind ferner eingangs- und ausgangsseitig über als Nutzkanäle zu bezeichnende Übertragungskanäle NK1 bis NKm mit Multiplexer/Demultiplexer-Einrichtungen MD1 bis MDm verbunden. Diese Multiplexer/Demultiplexer-Einrichtungen MD1 bis MDm sind mit weiteren Eingängen bzw. Ausgängen über als Signalisierungskanäle zu bezeichnenden Übertragungskanälen SK1 bis SKm mit Eingängen bzw. Ausgängen der zu der Datenvermittlungsanlage EDS gehörenden Anschlussschaltungen SAGD1 bis SAGDm verbunden. Ferner sind die Multiplexer/Demultiplexer-Einrichtungen MD1 bis MDm mit gesonderten Übertragungsleitungen L1 bis Lm verbunden, über die sie Signale aufnehmen, die an die zugehörigen Nutzsignal- bzw. Signalisierungskanäle weiterzuleiten sind bzw. über die sie Signale weiterleiten, die ihnen von den zugehörigen Nutzsignal- und Signalisierungskanäle zugeführt werden.

Bezüglich der Multiplexer/Demultiplexer-Einrichtungen MD1 bis MDm sei noch angemerkt, dass diese durch voneinander getrennte Multiplexereinrichtungen und Demultiplexereinrichtungen gebildet sein können, die jeweils über voneinander getrennte Übertragungsleitungen Signale aufnehmen bzw. abgeben. Dies bedeutet, dass beispielsweise die in Fig. 1 lediglich als Einzelleitungen dargestellten Übertragungsleitungen NK1, SK1 und L1 jeweils durch zwei Leitungen gebildet sein können, von denen jeweils eine Leitung für eine Signalübertragungsrichtung vorgesehen ist. Auf den betreffenden Übertragungsleitungen treten die die einzelnen Signale bildenden Bits üblicherweise seriell auf. Im übrigen sei an dieser Stelle noch angemerkt, dass — wie dies aus Fig. 1 hervorgeht — jede Multiplexer/Demultiplexer-Einrichtung MD1 bis MDm mit zwei Anschlussschaltungen der beiden in Fig. 1 dargestellten Gruppen von Anschlussschaltungen verbunden ist. Diese Anschlussschaltungen verarbeiten — wie dies weiter unten noch näher ersichtlich werden wird — Signale mit unterschiedlichen Geschwindigkeiten. Die zu der Koppeleinrichtung K gehörenden Anschlussschaltungen SAGK1 bis SAGKm verarbeiten im einzelnen Datensignale, die mit einer relativ hohen Geschwindigkeit von beispielsweise 64 kbits/s auftreten; die zu der Datenvermittlungsanlage EDS gehörenden Anschlussschaltungen SAGD1 bis SAGDm verarbeiten Signalisierungsinformationen, die mit einer relativ niedrigen Geschwindigkeit von beispielsweise 2,4 kbits/s auftreten.

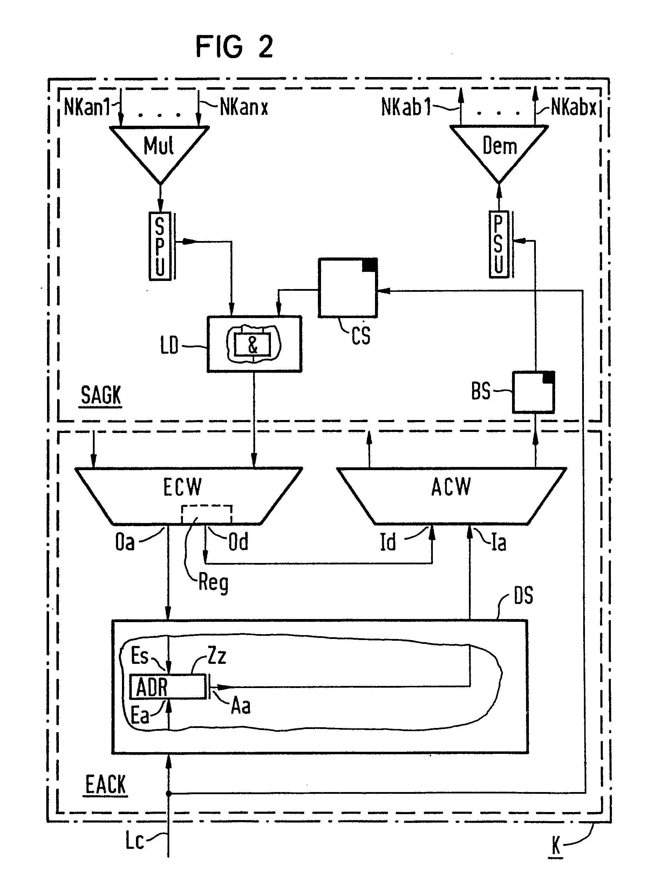

In Fig. 2 ist eine mögliche Realisierungsform der in Fig. 1 angedeuteten Koppeleinrichtung K gezeigt. Dabei sind die Verbindungssteuerschaltung EACK und eine Anschlussschaltung SAGK näher veranschaulicht.

Die in Fig. 2 dargestellte Anschlussschaltung SAGK umfasst einen Multiplexer Mul, der eingangsseitig mit Übertragungsleitungen NKan1 bis NKanx verbunden ist, über die Datensignale mit der relativ hohen Geschwindigkeit von beispielsweise 64 kbits/s übertragen werden können. Dieser Multiplexer Mul, der zyklisch betrieben werden mag, ist ausgangsseitig mit dem Eingang eines Serien-Parallel-Umsetzers SPU verbunden, der im vorliegenden Fall dazu dient, die dem Multiplexer Mul zugeführten und von diesem abgegebenen seriell auftretenden Datensignalbits in ein Parallelformat umzusetzen.

Mit den Parallelausgängen des Serien-Parallel-Umsetzers SPU ist eine Verknüpfungsanordnung LD verbunden, von der in Fig. 2 lediglich ein UND-Glied angedeutet ist. Diese Verknüpfungsanordnung LD umfasst jedoch zumindest eine der Anzahl der von dem Serien-Parallel-Umsetzer SPU parallel abgegebenen Datensignalbits entsprechende Anzahl von Verknüpfungsgliedern. Die Verknüpfungsanordnung LD ist mit einem Steuereingang noch an einem Steuerspeicher CS angeschlossen, in welchem Markierungssignale, beispielsweise in Form einzelner Bits bezüglich derjenigen Übertragungsleitungen NKan1 bis NKanx eingetragen sein können, über die Datensignale zugeführt werden bzw. die in Datensignalverbindungen einbezogen sind.

Mit seiner Ausgangsseite ist die Verknüpfungsanordnung LD mit der Eingangsseite der Verbindungssteuerschaltung EACK verbunden. Im einzelnen ist die Verknüpfungsanordnung LD ausgangsseitig mit der Eingangsseite eines zu der Verbindungssteuerschaltung EACK gehörenden Eingabecodierers ECW verbunden, und zwar über eine Mehrzahl von Leitungen, deren Anzahl zumindest gleich der Anzahl der Datensignalbits ist, die von dem Serien-Parallel-Umsetzer SPU jeweils abgegeben werden. Bezüglich des Eingabecodierers ECW sei an dieser Stelle noch angemerkt, dass dieser praktisch von der gleichen Art sein kann wie der Eingabecodewandlerteil des zu der in Fig. 1 dargestellten Datenvermittlungsanlage EDS gehörenden Eingabe-/Ausgabe-Codewandlers EACD.

Die in Fig. 2 dargestellte Verbindungssteuerschaltung EACK weist ferner einen Ausgabecodierer ACW auf, der ausgangsseitig mit der Anschlussschaltung SAGK verbunden ist. Dieser Ausgabecodierer ACW kann im übrigen von derselben Art sein wie der Ausgabecodewandlerteil des zuvor erwähnten Eingabe-/Ausgabe-Codewandlers EACD gemäss Fig. 1.

An dem mit der Verbindungssteuerschaltung EACK verbundenen Eingang der Anschlussschaltung SAGK ist ein Pufferspeicher BS vorgesehen, der ausgangsseitig mit einem Parallel-Serien-Umsetzer PSU verbunden ist. Dadurch ist es möglich, die der Verbindungssteuerschaltung EACK von der Anschlussschaltung SAGK zuvor im Parallelformat zugeführten Datensignale wieder in das ursprüngliche Serienformat umzusetzen, bevor die betreffenden Datensignale wieder weitergeleitet werden. Die Weiterleitung der betreffenden Datensignale erfolgt vom Ausgang des Parallel-Serien-Umsetzers PSU über einen Demultiplexer Dem, der ausgangsseitig mit Übertragungsleitungen NKab1 bis NKabx verbunden ist. Diese Übertragungsleitungen NKab1 bis NKabx stellen sogenannte Hochgeschwindigkeits-Abnehmerleitungen dar, über die die mit relativ hoher Übertragungsgeschwindigkeit von beispielsweise 64 kbits/s auftretenden Datensignale abgegeben werden. Die mit der Eingangsseite des Multiplexers Mul verbundenen Übertragungsleitungen NKan1 bis NKanx stellen demgegenüber sogenannte Hochgeschwindigkeits-Zubringerleitungen dar, über die die mit relativ hoher Übertragungsgeschwindigkeit auftretenden Datensignale zugeführt werden. Bezüglich des zuvor betrachteten Demultiplexers Dem sei an dieser Stelle noch angemerkt, dass dieser wie der ebenfalls in Fig. 2 angedeutete Multiplexer Mul zyklisch arbeiten kann.

Der eingangsseitig mit der Anschlussschaltung SAGK verbundene Eingabecodierer ECW ist mit einem Adressenausgang Oa mit dem Adressierungseingang eines Durchschaltespeichers DS verbunden. An dem erwähnten Adressenausgang Oa gibt der Eingabecodierer ECW jeweils die Adresse derjenigen Zubringerleitung der Hochgeschwindigkeits-Zubringerleitungen NKan1 bis NKanx ab, über die gerade ein Datensignal zugeführt worden ist. Mit dieser Adresse, die eine interne Adresse darstellt, wird in dem Durchschaltespeicher DS eine der betreffenden Zubringerleitung individuell zugehörige Zubringerzelle, wie die in Fig. 2 angedeutete Zubringerzelle Zz adressiert angesteuert. Dazu wird dem Adressierungseingang Es dieser Zubringerzelle Zz die erwähnte Adresse zugeführt. In dieser Zubringerzelle Zz wird bei bestehender Datensignalverbindung eine Adresse ADR enthalten sein, welche die für die Datensignalaufnahme in Frage kommende Hochgeschwindigkeits-Abnehmerleitung der Abnehmerleitungen NKab1 bis NKabx bezeichnet. Die betreffende Adresse wird dabei von einem Adressenausgang Aa der betreffenden Zubringerzelle Zz abgegeben und einem Adresseneingang Ia des zugehörigen Ausgabecodierers ACW zugeführt. Der geschilderte Auslesevorgang erfolgt dabei im übrigen zerstörungsfrei, so dass die betreffende Adresse ADR in der betrachteten Zubringerzelle Zz weiterhin vorhanden ist.

Mit der dem Adresseneingang Ia des Ausgabecodierers ACW zugeführten Adresse vermag dieser Ausgabecodierer ACW nunmehr diejenige Abnehmerleitung der in Fig. 2 angedeuteten Abnehmerleitungen NKab1 bis NKabx zu adressieren, über die ein zuvor aufgenommenes Datensignal weiterzuleiten ist. Zu diesem Zweck kann gemäss Fig. 2 die betreffende Adresse zusammen mit dem Datensignal von dem Ausgabecodierer ACW über den Pufferspeicher BS und den Parallel-Serien-Umsetzer PSU an den Demultiplexer Dem abgegeben werden. Arbeitet der Demultiplexer Dem zyklisch, so kann durch die erwähnte Adresse gesteuert der Zeitpunkt festgelegt werden, zu dem das zugehörige Datensignal von dem Pufferspeicher BS an den mit diesem verbundenen Parallel-Serien-Umsetzer abgegeben bzw. von diesem abgerufen wird.

Um das jeweilige Datensignal in der vorstehend geschilderten Art und Weise von dem Ausgabecodierer ACW abgeben zu können, muss diesem das jeweilige Datensignal eingangsseitig zugeführt werden. Dazu ist der Ausgabecodierer ACW mit einem Datensignaleingang Id an einem Datensignalausgang Od des Eingabecodierers ECW ange

schlossen. Mit dem betreffenden Datensignalausgang Od des Eingabecodierers ECW kann ein Pufferregister Reg verbunden sein, wie dies in Fig. 2 durch eine gestrichelte Linie angedeutet ist. In diesem Pufferregister Reg kann das dem Eingabecodierer ECW jeweils zugeführte Datensignal vor seiner Weiterleitung über den Ausgabecodierer ACW zwischengespeichert werden.

Um die zuvor beschriebene adressierte Weiterleitung der auf den Hochgeschwindigkeits-Zubringerleitungen NKan1 bis NKanx auftretenden Datensignale über die Hochgeschwindigkeits-Abnehmerleitungen NKab1 bis NKabx vornehmen zu können, müssen in den den betreffenden Hochgeschwindigkeits-Zubringerleitungen zugehörigen Zubringerzellen des Durchschaltespeichers DS die Adressen der in Frage kommenden Hochgeschwindigkeits-Abnehmerleitungen eingetragen sein. Diese Adressen werden einem Adresseneinschreibeingang Ea der jeweiligen Zubringerzelle über die Steuerleitung Lc zugeführt, die auch in Fig. 1 angedeutet ist. Mit dieser Steuerleitung Lc ist gemäss Fig. 2 auch die Eingangsseite des bereits erwähnten Steuerspeichers CS verbunden.

Nachdem zuvor der Aufbau der in den Zeichnungen dargestellten Anordnungen erläutert worden ist, sei nunmehr die Arbeitsweise der Schaltungsanordnung gemäss der Erfindung näher erläutert. Dazu sei angenommen, dass über die in Fig. 1 dargestellte Übertragungsleitung L1 Signale zugeführt werden, die über die Leitung Lm weiterzuleiten sind. Im Zuge des Aufbaus der gewünschten Verbindung werden zunächst Signalisierungsinformationen über die Übertragungsleitung L1 zugeführt werden. Diese Signalisierungsinformationen gelangen dann über den Signalisierungskanal SK1 zu der Anschlussschaltung SAGD1 der Datenvermittlungsanlage EDS hin. Auf das Auftreten der die gewünschte Abnehmerleitung Lm bezeichnenden Wahlinformation innerhalb der Signalisierungsinformation laufen dann in der Datenvermittlungsanlage EDS folgende Funktionen ab. Zunächst einmal wird in die der betreffenden Zubringerleitung zugehörige Zubringerzelle der Speichereinheit SE die Adresse der gewünschten Abnehmerleitung eingetragen. Für die Datenvermittlungsanlage EDS ist die Zubringerleitung dabei allerdings durch den Signalisierungskanal SK1 gebildet, und die Abnehmerleitung ist durch den Signalisierungskanal SKm gebildet. Die die Ermittlung und Bereitstellung der betreffenden Adresse betreffenden Vorgänge werden hier nicht weiter erläutert, da sie bereits an der oben erwähnten anderen Stelle erläutert sind. Nach Eintragen der erwähnten Adresse in die der betrachteten Zubringerleitung zugehörige Zubringerzelle können dann Signalisierungsinformationen über die Datenvermittlungsanlage EDS zwischen den an der Zubringerleitung L1 und an der Abnehmerleitung Lm angeschlossenen Einrichtungen ausgetauscht werden (end-to-end-Signalisierung).

Die zuvor erwähnte Adresse wird ferner von der Datenvermittlungsanlage EDS über die Steuerlei

tung Lc auch an die Koppeleinrichtung K abgegeben. Wie im Zusammenhang mit Fig. 2 bereits angedeutet, wird die betreffende Adresse in eine Zubringerzelle des Durchschaltespeichers DS der Verbindungssteuerschaltung EACK der Koppeleinrichtung K eingeschrieben. Bei dieser Zubringerzelle handelt es sich um diejenige Speicherzelle des Durchschaltespeichers DS, die derselben Zubringerleitung L1 zugehörig ist, bezüglich der bereits in der Speichereinheit SE eine Speicherzelle (Zubringerzelle) vorgesehen ist. Die in dem Durchschaltespeicher DS vorgesehene Zubringerzelle ist dabei allerdings genaugenommen bezogen auf den angenommenen Fall dem Nutzkanal NK1 zugehörig. Die in die betreffende Zubringerzelle des Durchschaltespeichers DS eingetragene Adresse bezeichnet demgemäss genaugenommen den Nutzkanal NKm als Abnehmerleitung im angenommenen Fall.

Mit dem Eintragen einer Adresse in eine Zubringerzelle des Durchschaltespeichers DS gemäss Fig. 2 wird auch ein entsprechender Eintrag in den Steuerspeicher CS gemäss Fig. 2 vorgenommen. Dieser Eintrag in Form eines Markierungssignals bzw. Bits legt dann fest, von welcher Zubringerleitung bzw. von welchem Zubringerkanal zugeführte Datensignale zu vermitteln sind. Dazu werden der Steuerspeicher CS und der in Fig. 2 angedeutete Multiplexer Mul in ihrer Arbeitsweise aufeinander abgestimmt sein.

Sind die Adressen in die in Frage kommenden Zubringerzellen der Speichereinheit SE der Datenvermittlungsanlage EDS und des Durchschaltespeichers DS der Koppeleinrichtung K eingetragen, so laufen die die Vermittlung von Signalisierungsinformationen und Datensignalen betreffenden Vorgänge im Grunde genommen unabhängig voneinander ab. Die Übertragung der mit relativ hoher Geschwindigkeit auftretenden Datensignale über die gesonderte Koppeleinrichtung K erfolgt dabei überdies ohne zusätzliche Belastung der Datenvermittlungsanlage EDS. Dies bedeutet, dass diese Datenvermittlungsanlage EDS für die Vermittlung der erwähnten Datensignale keine gesonderten Arbeits- bzw. Speicherzyklen bereitstellen muss, wie dies andererseits der Fall ist, wenn Signalisierungsinformationen aufzunehmen bzw. abzugeben sind. Dies bedeutet, dass im vorliegenden Fall die Datenvermittlungsanlage EDS nicht durch die Gesamt-Vermittlungskapazität beeinträchtigende Vermittlungsvorgänge im Zuge der Vermittlung der mit der relativ hohen Übertragungsgeschwindigkeit auftretenden Datensignale belastet ist. Damit kann die Datenvermittlungsanlage EDS – die zusammen mit einer Mehrzahl entsprechender Datenvermittlungsanlagen zu einem Datenvermittlungsnetz gehören kann – auf einfache Weise in ein dienstintegriertes digitales Fernmeldenetz ISDN einbezogen werden, ohne dass dadurch die Vermittlungskapazität für die an der betreffenden Datenvermittlungsanlage normalerweise angeschlossenen Einrichtungen nennenswert absinkt, die Signale mit relativ niedriger Übertragungsgeschwindigkeit von beispielsweise 50 bit/s abgeben bzw. aufnehmen.

**Patentansprüche**

1. Schaltungsanordnung zur Aufnahme von mit relativ hoher Geschwindigkeit auf Hochgeschwindigkeits-Zubringerleitungen (NKan1 bis NKanx) auftretenden Datensignalen und Weiterleitung dieser Datensignale über Hochgeschwindigkeits-Abnehmerleitungen (NKab1 bis NKabx) in einem wenigstens eine Zeitvielfach-Datenvermittlungsanlage (EDS) umfassenden Datenvermittlungsnetz, in welchem jeder Zeitvielfach-Datenvermittlungsanlage (EDS) eine gesonderte Koppeleinrichtung (K) zugeordnet ist, über die die genannten Datensignale vermittelt werden und die dazu von einer Steuereinrichtung (UEAS) der Zeitvielfach-Datenvermittlungsanlage (EDS) steuerbar ist, über welche im Zuge der jeweiligen Datensignalverbindung mit relativ niedriger Geschwindigkeit auftretende Signalisierungsinformationen vermittelt werden, dadurch gekennzeichnet, dass die Koppeleinrichtung (K) einen Durchschaltespeicher (DS) mit den Hochgeschwindigkeits-Zubringerleitungen (NKan1 bis NKanx) individuell zugeordneten Zubringerzellen (Zz) aufweist, in die von der Steuereinrichtung (UEAS) der zugehörigen Zeitvielfach-Datenvermittlungsanlage (EDS) jeweils eine Adresse einer für eine Datensignalaufnahme in Frage kommenden Hochgeschwindigkeits-Abnehmerleitung (z.B. NKab1) einschreibbar ist, und dass im Zuge der Vermittlung von mit der hohen Geschwindigkeit auftretenden Datensignalen lediglich der der jeweiligen Hochgeschwindigkeits-Zubringerleitung (z.B. NKan1) zugeordneten Zubringerzelle (Zz) des Durchschaltespeichers (DS) angesteuert und durch Bereitstellung der in der betreffenden Zubringerzelle (Zz) enthaltenen Adresse (ADR) die für eine Datensignalaufnahme in Frage kommende Hochgeschwindigkeits-Abnehmerleitung (NKan1) wirksam geschaltet wird.

2. Schaltungsanordnung nach Anspruch 1, dadurch gekennzeichnet, dass der Durchschaltespeicher (DS) zur Adressierung seiner Zubringerzellen (Zz) am Ausgang (Oa) eines Eingabecodierers (ECW) angeschlossen ist, der ausgangsseitig den mit ihm verbundenen Hochgeschwindigkeits-Zubringerleitungen (NKan1 bis NKanx) entsprechende Adressensignale abzugeben vermag, und dass der Durchschaltespeicher (DS) ausgangsseitig (Od) mit dem Eingang (Id) eines Ausgabecodierers (ACW) verbunden ist, der auf eine Adressierung durch die von dem Durchschaltespeicher (DS) abgegebenen Adressen hin die für die Weiterleitung von Datensignalen zu benutzenden Hochgeschwindigkeits-Abnehmerleitungen (NKab1 bis NKabx) wirksam zu schalten gestattet.

3. Schaltungsanordnung nach Anspruch 2, dadurch gekennzeichnet, dass der Eingabecodierer (ECW) einen Datensignal-Puffer (Reg) enthält, der ausgangsseitig (Od) direkt mit einem Durchschalteeingang (Id) des Ausgabecodierers (ACW) verbunden ist.

4. Schaltungsanordnung nach einem der Ansprüche 2 oder 3, dadurch gekennzeichnet, dass der Eingabecodierer (ECW) eingangsseitig über eine Verknüpfungsanordnung (LD) nur mit denjenigen Hochgeschwindigkeits-Zubringerleitungen (NKan1 bis NKanx) wirksam verbunden ist, die in Datensignalverbindungen einbezogen sind.

5. Schaltungsanordnung nach Anspruch 4, dadurch gekennzeichnet, dass die Verknüpfungsanordnung (LD) von einem Steuerspeicher (CS) gesteuert wird, in welchem für jede Hochgeschwindigkeits-Zubringerleitung (NKan1 bis NKanx) ein gesonderter Speicherplatz vorgesehen ist, in den lediglich dann ein bestimmtes Markierungssignal (1-Bit) eingetragen ist, wenn die zugehörige Hochgeschwindigkeits-Zubringerleitung (z.B. NKan1) in eine Datensignalverbindung einbezogen ist.

6. Schaltungsanordnung nach Anspruch 5, dadurch gekennzeichnet, dass die Markierungssignale in den Steuerspeicher (CS) zugleich mit dem Eintragen der Adressen (ADR) in den Durchschaltespeicher (DS) eingetragen werden.

7. Schaltungsanordnung nach einem der Ansprüche 2 bis 6, dadurch gekennzeichnet, dass am Ausgang des Ausgabecodierers (ACW) ein gesonderter Pufferspeicher (BS) vorgesehen ist.

8. Schaltungsanordnung nach einem der Ansprüche 2 bis 7, dadurch gekennzeichnet, dass bei seriell auftretenden Datensignalbits der Eingabecodierer (ECW) eingangsseitig mit einem Serien-Parallel-Umsetzer (SPU) und der Ausgangscodierer (ACW) ausgangsseitig mit einem Parallel-Serien-Umsetzer (PSU) verbunden sind.

## Claims

1. Circuit arrangement for receiving data signals which occur at a relatively high speed on high-speed incoming lines (NKan1-NKanx) and forwarding these data signals via high-speed outgoing lines (NKb1-NKabx) in a data switching network which includes at least one t.d.m. data switching system (EDS) and in which each t.d.m. data switching system (EDS) is assigned a separate switching device (K) via which the aforementioned data signals are switched and which for this purpose can be controlled by a control device (UEAS) of the t.d.m. data switching system (EDS) which serves to switch items of signalling information which occur at a relatively low speed in the course of the respective data signal connection, characterised in that the switching device (K) is provided with a switch-through store (DS) with incoming cells (Zz) which are individually assigned to the high-speed incoming lines (NKan1 to NKanx) and into each of which an address of a high-speed outgoing line (e.g. NKab1) to be used for acceptance of data signals can be input by the control device (UEAS) of the associated t.d.m. data switching system (EDS), and that in the course of the switching of data signals which occur at the high speed, only that incoming cell (Zz) within the switch-through store (DS) which is assigned to the relevant high-speed incoming line (e.g. NKan1) is operated, and by making available the address (ADR) contained in the incoming cell (Zz) in question the high-speed outgoing line (NKan1) to be used for acceptance of data signals is actuated.

2. Circuit arrangement as claimed in claim 1, characterised in that the switch-through store (DS) which serves to address its incoming cells (Zz) is connected to the output (OA) of an input coder (ECW) which at its output end is capable of emitting address signals which correspond to the high-speed incoming lines (NKan1 to NKanx) to which it is connected, and that the switch-through store (DS) is connected at its output end (Od) to the input (Id) of an output coder (ACW) which, in response to addressing by the addresses emitted from the switch-through store (DS), permits the actuation of the high-speed outgoing lines (NKab1 to NKabx) to be used for forwarding data signals.

3. Circuit arrangement as claimed in claim 2, characterised in that the input coder includes a data signal buffer (Reg) which at its output end (Od) is directly connected to a switch-through input (Id) of the output coder (ACW).

4. Circuit arrangement as claimed in one of claims 2 or 3, characterised in that at its input end the input coder (ECW) is actively connected via a logic-linking arrangement (LD) only to those high-speed incoming lines (NKan1 to NKanx) which are included in data signal connections.

5. Circuit arrangement as claimed in claim 4, characterised in that the logic-linking arrangement (LD) is controlled by a control store (CS) in which, for each high-speed incoming line (NKan1 to NKanx), there is provided a separate storage position into which a specific marking signal (1-bit) is entered only when the associated high-speed incoming line (e.g. NKan1) is including in a data signal connection.

6. Circuit arrangement as claimed in claim 5, characterised in that the marking signals are input into the control store (CS) simultaneously with the input of the addresses (ADR) into the switch-through store (DS).

7. Circuit arrangement as claimed in one of the claims 2 to 6, characterised in that a special buffer store (BS) is provided at the output of the output coder (ACW).

8. Circuit arrangement as claimed in one of the claims 2 to 7, characterised in that in the case of data signal bits which occur in serial form, the input coder (ECW) is connected at its input end to a series-parallel converter (SPU) and the output coder (ACW) is connected at its output end to a parallel-series converter (PSU).

## Revendications

1. Circuit pour la réception de signaux de données qui apparaissent avec une vitesse relativement élevée sur des lignes d'amenée à vitesse élevée (NKan1-NKanx) et pour la transmission de ces signaux de données, par l'intermédiaire de lignes de réception à vitesse élevée (NKab1-NKabx), à un réseau de commutation de données

comportant au moins une installation de commutation de données à multiplexage par répartition dans le temps (EDS), réseau dans lequel on associe à chaque installation de commutation de données à multiplexage par répartition dans le temps (EDS) un dispositif de couplage particulier (K) par l'intermédiaire duquel lesdits signaux de données sont commutés et qui, à cet effet, est susceptible d'être commandé par un dispositif de commande (UEAS) de l'installation de commutation de données à multiplexage par répartition dans le temps (EDS), dispositif par l'intermédiaire duquel sont commutées, au cours de la liaison concernée des signaux de données, des informations de signalisations qui apparaissent avec une vitesse relativement faible, caractérisé par le fait que le dispositif de couplage (K) comporte une mémoire de commutation (DS) avec des cellules d'amenée (Zz) associées individuellement aux lignes d'amenée à vitesse élevée (NKan1 à NKanx), et dans lesquelles est susceptible d'être inscrite, par le dispositif de commande (UEAS) de l'installation de commutation à multiplexage par répartition dans le temps concerné (EDS), respectivement une adresse d'une ligne de réception à vitesse élevée (par exemple NKab1) qui est concernée par la prise en charge de données, et qu'au cours de la commutation de signaux de données qui apparaissent à une vitesse élevée seule est attaquée la cellule d'amenée (Zz) de la mémoire de commutation (DS), qui est associée à la ligne d'amenée à vitesse élevée concernée (par exemple NKan1), et est commutée dans son état efficace, par préparation de l'adresse (ADR) contenue dans la cellule d'amenée concernée (Zz), la ligne de réception à vitesse élevée (NKab1) à envisager pour la réception de signaux de données.

2. Circuit selon la revendication 1, caractérisé par le fait que la mémoire de commutation (DS) est, pour l'adressage de ses cellules d'amenée (Zz), reliée à la sortie (DA) d'un codeur d'introduction (ECW) qui est capable d'émettre du côté sortie les signaux d'adresse qui correspondent aux lignes d'amenée à vitesse élevée (NKan1 à NKanx) qui lui sont reliées, et que la mémoire de commutation (DS) est reliée, du côté sortie (Od) à l'entrée (Id) d'un codeur de sortie (ACW) qui, en réponse à un adressage par l'adresse émise par la mémoire de commutation (DS), autorise la commutation, dans leur état efficace, des lignes de réception à vitesse élevée (NKab1 à NKanx) qui sont à utiliser pour la transmission de signaux de données.

3. Circuit selon la revendication 2, caractérisé par le fait que le codeur d'introduction (ECW) comporte un tampon (Reg) pour les signaux de données, tampon qui est, du côté sortie (Od), directement relié à une entrée de commutation (Id) du codeur de sortie (ACW).

4. Circuit selon l'une des revendications 2 ou 3, caractérisé par le fait que le codeur d'entrée (ECW) est, du côté entrée et par l'intermédiaire d'un dispositif logique (LD), relié de façon active uniquement à celles des lignes d'amenée à vitesse élevée (NKan1 à NKanx) qui sont incluses dans des liaisons de signaux de données.

5. Circuit selon la revendication 4, caractérisé par le fait que le dispositif logique (LD) est commandé par une mémoire de commande (CS) dans laquelle il est prévu, pour chaque ligne d'amenée à vitesse élevée (NKan1 à NKanx), un emplacement de mémoire distinct dans lequel n'est enregistré un signal de marquage déterminé (1-Bit) que si la ligne d'amenée à vitesse élevée associée (par exemple NKan1) fait partie d'une liaison de signaux de données.

6. Circuit selon la revendication 5, caractérisé par le fait que les signaux de marquage sont inscrits dans la mémoire de commande (CS) en même temps que l'introduction des adresses (ADR) dans la mémoire de commutation (DS).

7. Circuit selon l'une des revendications 2 à 6, caractérisé par le fait qu'à la sortie du codeur de sortie (ACW) est prévue une mémoire tampon particulière (BS).

8. Circuit selon l'une des revendications 2 à 7, caractérisé par le fait que dans le cas de l'apparition sérielle de bits de signaux de données, le codeur d'introduction (ECW) est relié du côté entrée avec un convertisseur série-parallèle (SPU) et le codeur de sortie (ACW) est relié, du côté sortie, à un convertisseur parallèle-série (PSU).

# FIG 1

# FIG 2